# EUROPEAN PATENT SPECIFICATION

(11) **EP 3 058 126 B1**
(45) Date of publication and mention of the grant of the patent: **06.09.2017**
(21) Application number: 14796600.6
(22) Date of filing: 15.10.2014
(51) Int. Cl.: B32B 5/02, B32B 5/08, D21H 27/18, D21H 17/34, D21H 17/37, D21H 17/56, D21H 21/18, E04C 2/06, D04H 1/4218, B32B 13/14, D04H 1/544, D04H 1/546, D04H 1/55, D21H 13/14, D21H 13/24, D21H 13/40, D21H 17/13, E04C 2/04, E04C 2/16, E04C 2/28, E04B 2/00

(54) **FLEXIBLE NON-WOVEN MAT**
FLEXIBLE VLIESMATTE
NON-TISSÉ FLEXIBLE

(30) Priority: 16.10.2013 US 201361891564 P
(43) Date of publication of application: 24.08.2016
(73) Proprietor: OCV Intellectual Capital, LLC, Toledo, OH 43659 (US)
(72) Inventor: WU, Jianhul, Westerville, OH 43082 (US); KLETT, Paul, Aubrey, Newark, OH 43055 (US)
(74) Representative: Nevant, Marc
(86) International application number: PCT/US2014/060576
(87) International publication number: WO 2015/057763

(56) References cited:
- EP-A1- 0 297 500
- WO-A1-95/34703
- WO-A1-2006/115503
- WO-A1-2011/017591
- WO-A2-2005/103367
- US-A- 4 255 485
- US-A- 5 772 846

## Description

### RELATED APPLICATIONS

### FIELD OF INVENTION

The present invention relates to non-woven fiber mats with improved flexibility, and methods of manufacturing a non-woven fiber mat with improved flexibility, for the preparation of reinforced articles.

### BACKGROUND

Conventional non-woven mats include a fibrous web bound together by a suitable resinous binder. Reinforcement fibers, such as glass fibers, are useful in a variety of technologies, and may be used in the form of continuous or chopped filaments, strands, rovings, woven fabrics, nonwoven fabrics, meshes, and scrims, such as to reinforce polymers. Reinforced polymeric composites can be formed in a variety of ways from a polymeric matrix material, reinforcing material, and any other components. Such composites are formed using reinforcement fibers which provide dimensional stability and excellent mechanical properties to the resulting composites.

For example, glass fibers provide dimensional stability as they generally do not shrink or stretch in response to changes in atmospheric conditions. Further, glass fibers have high tensile strength, heat resistance, moisture resistance, and high thermal conductivity. The prior art document US 4 255 485 A discloses a non-woven mat comprising chopped glass fibers, a binder composition comprising a mixture of thermoset and thermoplastic materials and a coupling agent.

Non-woven fiber mats are commonly used in pultrusion processes to form pultruded parts. Generally, pultrusion involves impregnating fiber mats with a suitable resin material and passing the impregnated mat through a heated die. By passing the impregnated and consolidated mat through the heated die, the mat may be formed into a desired shaped and resin is cured to hold the mat together. The composite part exiting the heated die is then cut to a desired length.

The continuous nature of the pultrusion process advantageously enables composites of any desired length to be produced. However, there are numerous problems associated with the pultrusion process. One problem lies within the resin bath. Thermoset resins are often used, which generally require the use of volatile unsaturated monomers such as styrene and/or methyl methacrylate. Styrene is a potent solvent, and can easily swell and degrade a binder applied to the reinforcement mat. Such degradation of the binder can cause the fiber mat to weaken and be unable to withstand the strong pulling forces encountered in the pultrusion process.

Both continuous filament mats and chopped strand mats coated with a binder may be used in the pultrusion process. Although continuous filament mats are flexible, conformable, and have an excellent resistance to styrene, they possess several drawbacks. For instance, continuous filament mats are expensive to manufacture because fabrication of the continuous filament mats occurs at a slow rate, such as, 0.25-0.38 m/s (50-75 feet per minute (fpm)). Additionally, the utilization of continuous filament mats yields laminates that have a poor surface finish due to the long strands of glass that form the mats. Further, continuous filament mats are dense and add increased weight to the final part, which may be an undesirable feature.

In contrast, chopped strand mats are less expensive to manufacture than continuous filament mats because fabrication occurs at a faster rate (that is, 2.54-7.62 m/s (500-1500 fpm)). Additionally, chopped strand mats are essentially fully dispersed fibers, which give the pultruded part a smoother appearance than continuous filament mats. In addition, chopped strand mats are advantageously "space filling" without adding a lot of weight to the laminate. Despite these positive attributes, chopped strand mats can be very stiff with thermoset binders and therefore difficult to form into complex shapes. Additionally, the stiffness of the chopped strand mats causes a feel that may be undesirable to customers.

Therefore, a need exists for a non-woven mat that is flexible enough to be formed into complex shapes, is compatible with the matrix resin, and is lightweight yet has sufficient strength properties such that it can be used satisfactorily in downstream processing, such as pultrusion and the formation of gypsum wall boards.

### SUMMARY

In some exemplary embodiments of the present invention, the physical properties of a non-woven chopped strand mat are improved by formulating a binder composition with excellent tensile strength coupled with good flexibility for use in combination with proper fiber design.

In various exemplary embodiments of the present invention, a flexible non-woven chopped strand mat is provided that includes a mixture of 10 to 100 weight percent glass fibers and 0 to 90 weight percent synthetic fibers. The non-woven chopped strand mat further includes a binder composition comprising a binder resin and a silane coupling agent.

In accordance with further exemplary embodiments of the present invention, it has been found that the synthetic fibers include at least one of polypropylene, polyester, and a combination thereof.

According to the present invention, the binder resin includes a combination of a thermoset material and a thermoplastic material. Some exemplary embodiments include a mixture of one or more of an acrylic material, a urea formaldehyde material, or a combination thereof, with ethylene vinyl acetate. According to the present invention the binder resin comprises 50 to <100 weight percent thermoplastic material and >0 to 50 weight percent thermoset material.

In accordance with various exemplary embodiments of the present invention, the binder composition used in the flexible non-woven mats is resistant to styrene monomers.

In some exemplary embodiments, the flexible non-woven chopped strand mat has an average machine direction tensile strength of at least 13.64 kg (30 lb) in the machine direction and at least 9.09 kg (20 lb) in the cross direction. By 'machine direction" it is meant the direction that coincides with the direction the mat moves during manufacture. The mat has a MD (machine direction) Gurley stiffness of 19.61 to 68.65 mN (2000 to 7000 milligrams of force (mgf)), measured by a Gurley Stiffness tester.

In various exemplary embodiments of the present invention, a pultruded composite product is provided. The pultruded composite product includes a plurality of rovings impregnated with a thermosetting resin and a flexible non-woven chopped strand mat. Various exemplary aspects of the flexible non-woven mat include a mixture of 10 to 95 weight percent glass fibers and 5 to 90 weight percent synthetic fibers. The non-woven chopped strand mat further includes a binder composition that includes a binder resin and a silane coupling agent.

According to the present invention, the binder resin includes a combination of a thermoset material and a thermoplastic material. Some exemplary embodiments of the binder resin include a mixture of one or more of an acrylic material, a urea formaldehyde material, or a combination thereof, along with an ethylene vinyl acetate. The binder resin includes 50 to <100 weight percent thermoplastic material and >0 to 50 weight percent thermoset material.

In yet other exemplary embodiments of the present invention, a gypsum wall board is provided. The gypsum wall board includes a gypsum core and at least one flexible non-woven mat. Some exemplary embodiments of the flexible non-woven chopped strand mat include a mixture of 10 to 95 weight percent glass fibers and 5 to 90 weight percent synthetic fibers. The non-woven mat further includes a binder composition that includes a binder resin and a silane coupling agent.

### DETAILED DESCRIPTION

While various exemplary embodiments are described or suggested herein, other exemplary embodiments utilizing a variety of methods and materials similar or equivalent to those described or suggested herein are encompassed by the general inventive concepts.

Unless defined otherwise, all technical and scientific terms used herein have the same meaning as commonly understood by one of ordinary skill in the art to which the invention belongs. In this connection, unless otherwise indicated, concentrations of ingredients given in this document refer to the concentrations of these ingredients in the master batch or concentrate, in keeping with customary practice.

The general inventive concepts relate to a flexible non-woven chopped strand mat (generally, the non-woven mat) with improved properties. In some exemplary embodiments, the flexible non-woven mat demonstrates improved mechanical strength, such as high machine direction tensile strength and cross-direction tensile strength, while also showing improved flexibility. The softness and flexibility of the inventive non-woven mats improves downstream processes, for example, the formation of pultruded products having complex shapes and/or the production of gypsum wall boards. Additionally, in accordance with various exemplary embodiments, the inventive flexible non-woven mats are resistant to styrene and polyester that may be present in resin formulations utilized in pultrusion processes.

Some exemplary embodiments of the present invention relate to a flexible non-woven mat which may be utilized in various downstream processes, for example, in pultrusion processes and in gypsum wallboard formation. The non-woven mat is characterized by a number of attributes including very good flexibility. For instance, in some exemplary embodiments, the non-woven mats demonstrate a reduced stiffness of less than 58.84 mN (6000 mgf), or less than 49.03 mN (5000 mgf). This stiffness level is greatly reduced from conventional non-woven mats with stiffnesses around 68.65 mN (7000 mgf).

The flexible non-woven mats of the present invention may comprise a plurality of fibers, including any of glass fibers, synthetic fibers, or a blend thereof. The glass fibers can be made from any type of glass. Examples of glass fibers include A-type glass fibers, C-type glass fibers, E-type glass fibers, S-type glass fibers, ECR-type glass fibers (e.g., Advantex^{®} glass fibers commercially available from Owens Corning), Hiper-tex^{™}, wool glass fibers, and combinations thereof. The use of other reinforcing fibers such as mineral fibers, carbon fibers, ceramic fibers, natural fibers, and/or synthetic fibers in the non-woven mat is also considered to be within the purview of the general inventive concepts. The term "natural fiber" as used in conjunction with the present invention refers to plant fibers extracted from any part of a plant, including, but not limited to, the stem, seeds, leaves, roots, or phloem. Examples of natural fibers which may be suitable for use as the reinforcing fiber material include basalt, cotton, jute, bamboo, ramie, bagasse, hemp, coir, linen, kenaf, sisal, flax, henequen, and combinations thereof. The term "synthetic fibers" as used herein is meant to indicate any man-made fiber having suitable reinforcing characteristics, such as polyester, polyethylene, polyethylene terephthalate, polypropylene, polyamide, aramid, and polyaramid fibers, and combinations thereof.

In some exemplary embodiments, the fibers used to form the non-woven mats according to the present invention include a blend of glass fibers and synthetic resin fibers, such as polymer fibers. In accordance with various exemplary embodiments, the polymer fibers include those made from polypropylene, polyester, or a combination thereof. In some exemplary embodiments, the polymer fibers are formed from polyethylene terephthalate (PET).

In some exemplary embodiments, the fibers used to form the non-woven mats according to the present invention include a blend of 10 to 100 percent by weight glass fibers and 0 to 90 percent by weight polymer fibers. In other exemplary embodiments, the fibers include a blend of 50 to 90 percent by weight glass fibers and 10 to 50 percent by weight polymer fibers, or from 75 to 90 percent by weight glass fibers and about 10 to 25 percent by weight polymer fibers.

The glass fibers may be formed by conventional methods known to those skilled in the art. For example, the glass fibers may be formed by a continuous manufacturing process in which molten glass passes through the holes of a "bushing," the streams of molten glass thereby formed are solidified into filaments, and the filaments are combined together to form a fiber, "roving," "strand," or the like.

After the glass fibers are drawn from the bushing, an aqueous sizing composition (also referred to as a size) may optionally be applied to the fibers. The sizing composition is not limited, and may be any sizing known to those of skill in the art. Generally sizing compositions contain a lubricant to protect the fibers from damage by abrasion, a film-forming resin to help bond the fibers to the polymer forming the body or matrix of the composite in which the fibers will be used, and a coupling agent to improve the adhesion of the film-forming resin to the surfaces of the glass fibers. The sizing composition may be applied by conventional methods such as by an application roller or by spraying the size directly onto the fibers. The size protects the glass fibers from breakage during subsequent processing, helps to retard interfilament abrasion, ensures the integrity of the strands of glass fibers, promotes the interconnection of the glass filaments that form the strand, etc.

After the glass fibers are treated with the sizing composition, they may be chopped and packaged as chopped strand glass for subsequent processing into a wet-laid, non-woven mat as described below. In some exemplary embodiments, the chopped fibers may have a length from 1.27 to 5.08 cm (0.5 to 2.0 inches), or from 2.54 to 3.81 cm (1.0 to 1.5 inches). The chopped fibers may have varying lengths from each other within the non-woven mat.

In addition, the fibers may have a diameter from about 5 micrometers to about 20 micrometers, or from about 10 micrometers to about 16 micrometers. The chopped fibers may have varying lengths from each other within the non-woven mat.

It has been discovered that decreasing the length and/or diameter of the fibers may improve the toughness of a non-woven mat formed therefrom. The improvement in toughness may result from increased interfacial bonding that occurs with finer and shorter fibers, under the same basic weight construction. Interfacial bonding helps deflect stress concentration and crack propagation, which leads to enhanced toughness.. However, although fine fibers can create more closed mats with better tensile strengths, finer fibers tend to cause a loss of air permeation and reduced resin penetration. Therefore, since pultrusion applications require mats to be open enough to allow the resin to penetrate through, a balance must be achieved between achieving toughness and air permeation when forming the fibers for use herein. The fibers may be of uniform length and/or diameter, or the fibers may have a variety of lengths and diameters, such as desired for a particular application.

The flexible non-woven mat may be formed by a variety of processes, including dry-laid and wet-laid processes. In some exemplary embodiments, the non-woven mat is formed by a wet-laid process, which involves forming an aqueous dispersion or slurry of discrete fibers in a mix tank filled with various components (sometimes referred to as white water), such as water, surfactants, viscosity modifiers, defoaming agents, lubricants, biocides, and/or other chemical agents, along with agitation, to form a chopped glass fiber slurry. It is desirable that the slurry is agitated sufficiently to provide a uniform or nearly uniform dispersion of fibers.

The aqueous fiber dispersion or slurry may then be processed into a wet-laid mat according to any number of conventional methods known in the art. For example, the aqueous fiber slurry is deposited onto a moving screen or conveyor, on which the majority of the water drains through, leaving a randomly oriented fiber web. The fiber web may be further dried by a vacuum slot or other drying means.

A binder composition is then applied to the fiber web in a conventional manner, such as by curtain coating, spraying, a twin wire dip bath, a two roll padder, and the like. Water, excess binder, and excess coupling agent may then be removed by a vacuum or other water removal means. Finally, the binder-coated fiber product may be dried and cured in one or more ovens. An exemplary temperature range for drying is from 350 °F (218 °C) to 600 °F (304 °C). The dried and cured product is the finished non-woven flexible mat.

In accordance with various aspects of the present invention, the binder composition is formulated such that once the binder is cured, it is able to impart very good mechanical strength (total tensile strength of at least 36.36 kg (80 lbs)), flexibility (Gurley stiffness of less than 49.03 mN (5000 mgf)), and solvent resistance (styrene retention of at least 60%).

The binder composition comprises a binder resin material, a coupling agent, and one or more optional additives. The binder resin is a mixture of thermoset and thermoplastic materials. The thermoset material may comprise, for example, an acrylic material, a urea formaldehyde material, or a combination of the two materials. In some exemplary embodiments, the acrylic material is polyacrylic acid, such as low molecular weight polyacrylic acid with a molecular weight at or below 10,000. The thermoset material, once cross-linked under proper curing conditions, provides good tensile performance and solvent resistance, helping maintain mat integrity in different applications. In some exemplary embodiments, the thermoplastic material may include any thermoplastic material having a low Tg (*i.e.*, below -15 °C), for example, ethylene vinyl acetate ("EVA"). In some exemplary embodiments, the EVA comprises Dur-O-Set® E-646. The thermoplastic material is self cross-linking and can provide the softness needed for flexible mats.

It has been discovered that formulating a binder composition that incorporates resins with differing functionalities (e.g., thermoset and thermoplastic) may impart improved properties to a fiber reinforced mat. In particular, the combination of such properties may allow the non-woven mats to be used in challenging applications, such as in pultrusion applications, as a replacement for continuous filament mats. The binder compositions include >0 to 50 percent by weight thermoset material, such as polyacrylic acid and 50 to <100 percent by weight thermoplastic material, such as EVA. In one embodiment, the binder composition comprises 15 to 30 percent by weight polyacrylic acid and 70 to 85 percent by weight EVA.

In some exemplary embodiments, the binder resin may be present in the binder composition in an amount from 90 percent to 99 percent by weight of the total binder composition, and in exemplary embodiments, from 97 percent to 99 percent by weight. As used herein, the phrases "percent by weight" and "percent by weight of the composition" are meant to denote percent by weight of the total components of the composition.

The binder composition may further include a coupling agent. It is to be appreciated that the coupling agents described herein are exemplary in nature, and any suitable coupling agent known to those of ordinary skill in the art may be utilized in any of the exemplary embodiments described or otherwise suggested herein. In some exemplary embodiments, the coupling agent, or coupling agents, may be present in the binder composition in an amount from 0.05 percent to 10.0 percent by weight of the total binder composition, and in other exemplary embodiments, in an amount from 0.1 percent to 3.0 percent by weight. Various exemplary embodiments include 0.2 percent by weight of a coupling agent. Besides their role of coupling the surface of the reinforcement fibers and the surrounding matrix, coupling agents also function to reduce the level of fuzz, or broken fiber filaments, during subsequent processing.

In some exemplary embodiments, at least one of the coupling agents is a silane coupling agent. Suitable silane coupling agents may include silanes containing one or more nitrogen atoms that have one or more functional groups such as amine (primary, secondary, tertiary, and quaternary), amino, imino, amido, imido, ureido, or isocyanato. Suitable silane coupling agents may also include, but are not limited to, aminosilanes, silane esters, vinyl silanes, methacryloxy silanes, epoxy silanes, sulfur silanes, ureido silanes, and isocyanato silanes. Specific, non-limiting examples of silane coupling agents for use in the instant invention include γ-methacryloxypropyl-trimethoxysilane (A-174), γ-aminopropyltriethoxysilane (A-1100), n-phenyl-γ-aminopropyltrimethoxysilane (Y-9669), n-trimethoxy-silyl-propyl-ethylene-diamine (A-1120), methyl-trichlorosilane (A-154), γ-chloropropyl-trimethoxy-silane (A-143), vinyl-triacetoxysilane (A-188), and methyltrimethoxysilane (A-1630).

The binder composition may optionally include additional components, for example, dyes, oils, fillers, colorants, aqueous dispersions, UV stabilizers, lubricants, wetting agents, surfactants, viscosity modifiers, and/or antistatic agents. The aqueous dispersions may include antioxidant dispersions, which counter the effects of oxidation by the binder composition due to aging. One exemplary antioxidant dispersion includes Bostex 537, from Akron Dispersions, Inc. The antioxidant dispersion may be included in amounts from 0 to 5 percent by weight, or from 0.5 to 3 percent by weight. Some exemplary embodiments include 1.8 percent by weight of an antioxidant dispersion. Additives may be included in the binder composition in an amount of 0 to 10 percent by weight of the binder composition.

In accordance with some exemplary embodiments, the binder composition further includes water to dissolve or disperse the components for application onto the reinforcement fibers. Water may be added in an amount sufficient to dilute the aqueous binder composition to a viscosity that is suitable for its application to the reinforcement fibers. For example, the binder composition may contain from 50 percent to 75 percent by weight of the binder composition of water.

The bonded mats of the present invention may have an average thickness of between 25 and 75 millimeters, or from 30 to 60 millimeters.

Incorporating a soft, but strong binder composition, in combination with the proper blend of glass and/or synthetic fibers, produces a flexible non-woven mat with improved processing capabilities, which facilitate use in pultrusion processes, the formation of smooth gypsum mats, and other related applications for which non-woven mats have here before been ill suited. Once the binder is cured, it imparts additional features, such as improved mechanical strength (*e.g.,* in both the machine and cross-direction tensile strengths), flexibility, and solvent resistance.

In some exemplary embodiments, the flexible non-woven mats have an average tensile strength of at least 13.64 kg (30 lb) in the machine direction and at least 9.09 kg (20 lb) in the cross direction. In some exemplary embodiments, the flexible non-woven mats have a machine direction tensile strength of at least 22.73 kg (50 lb) and a cross-direction tensile strength of at least 13.64 kg (30 lb). The flexible non-woven mats may further have a total tensile strength (machine direction + cross-direction) of at least 22.73 kg (50 lb), or at least 36.36 kg (80 lb).

As mentioned above, the non-woven mats have improved flexibility, which may be measured using a Gurley stiffness tester. The non-woven mat has a Gurley stiffness of 19.61 to 68.65 mN (2000 to 7000 mgf), or from 24.52 to 58.84 mN (2500 to 6000 mgf), and in other exemplary embodiments, less than 49.03 mN (5000 mgf).

The flexible non-woven mats may be used in a variety of downstream processes to form a variety of end products. In some exemplary embodiments, the flexible non-woven mat is used to form a composite product through a pultrusion process. In some exemplary embodiments, the pultrusion process includes feeding rovings and at least one non-woven mat into a thermosetting resin bath where the rovings are moved over spreader bars which aid in impregnating the resin into the fibers. The rovings may be made from glass, graphite, boron, polyaramid fibers, or other similar fibers. Preferably, the roving is made from glass fibers.

Once the rovings are sufficiently impregnated with the resin, the rovings and the non-woven mat exit the resin bath and are pre-formed by a pre-former into a shape or profile prior to entering a heated molding die. The rovings and non-woven mat, which have the pre-formed shape, are then cured into the desired form of the composite by heating continuously as the part passes through the heated molding die. A pair of caterpillar rollers may be used to pull the rovings and mat through the bath, pre-former, and /or heated die. The composite part exiting the heated die is then cut to a desired length by a cutting apparatus. In this manner, the fibers of the continuous roving are impregnated with a polymer resin, the mat is coated with the polymer resin, and the fibers and mat are shaped into the form of the composite and cut to form a pultruded part. The rovings impart a longitudinal tensile strength and the non-woven mat imparts a transverse tensile strength to the pultruded part.

As discussed herein, the binder composition provides improved resistance to styrene monomers commonly found in thermosetting resins used in pultrusion processes. This enhanced resistance to styrene makes the inventive flexible mats more suitable for pultrusion processes. As discussed herein, styrene monomers are a potent solvent and can act to swell and degrade the binder, thereby weakening the continuity of the mat. By providing a flexible non-woven mat resistant to styrene monomers, the flexible non-woven mat, and thus the resulting pultruded part incorporating the same, maintain tensile strength in the longitudinal direction as well as in the transverse direction.

The flexible non-woven mats may also be used in other processes, such as, for example, the production of gypsum wall boards and/or gypsum panels frequently used in building construction. Wall boards formed of a gypsum core sandwiched between facing layers are commonly used in the construction industry as internal walls and ceilings for both residential and commercial buildings. The gypsum core typically contains gypsum, optionally some wet chopped glass fibers, water resistant chemicals, binders, accelerants, and low-density fillers. It is known in the art to form gypsum boards by providing a continuous layer of a facing material, such as a fibrous veil, and depositing a gypsum slurry onto one surface of the facing material. A second continuous layer of facing material is then applied to the opposite surface of the gypsum slurry. In this manner, the gypsum slurry is sandwiched between opposing layers of facing material. The sandwiched gypsum slurry is then adjusted to a desired thickness and dried to harden the gypsum core and form a gypsum board. Next, the gypsum board may be cut to predetermined dimensions (e.g., length) for end use. Glass fibers are commonly used in the production of gypsum wall boards to improve the tensile and tear strength of the products.

In accordance with various exemplary embodiments, the flexible non-woven mats may be used as the facings in a gypsum wall board to provide increased dimensional stability in the presence of moisture, increased biological resistance, increased air permeability, and greater physical and mechanical properties, such as better strength and durability, than conventional gypsum boards faced with paper or other cellulosic facing materials.

Having generally introduced the general inventive concepts by disclosing various exemplary embodiments thereof, a further understanding can be obtained by reference to certain specific examples illustrated below which are provided for purposes of illustration only and are not intended to be all inclusive or otherwise limiting of the general inventive concepts.

### WORKING EXAMPLES

In order to more thoroughly describe this invention, the following working example is provided.

### Example 1

Three non-woven mats were made by a conventional wet laid coating process in which chopped glass fibers, after being deposited onto a moving screen in the form of an aqueous slurry, were coated with an aqueous dispersion of a binder composition and then dried and cured. Each mat was made with 1.25" M fiber (16 micrometer diameter) with the same loss on ignition (LOI) and base weight. The binder composition applied to each mat included a varied ratio of thermoplastic/thermoset components. The binder of the first mat include 100 percent polyacrylic acid, the binder of the second mat included 75 percent polyacrylic acid and 25 percent ethylene vinyl acetate, and the binder of the third mat included 50 percent polyacrylic acid and 50 percent ethylene vinyl acetate. Each composition was cured at 251.7 °C (485 °F).

The fiberglass mats so obtained were then tested for max bending strength and Gurley stiffness, to determine the bending resistance/stiffness of the mat.

The results obtained are set forth in Table 1.

**TABLE 1**

| **Mat Flexibility vs. Binder Component Ratio** | | |
|---|---|---|
| **Binder formulation** | **Max Load (3 pts bending test, Machine Direction)** | **Gurley Stiffness (Machine Direction)** |
| 100% PAA | 1.10 N | 76.08 mN |
| | [111.8 gram force (gf)] | [7758 mgf] |
| 75% PAA/25% EVA | 0.99 N | 66.37 mN |
| | [100.8 gram force (gf)] | [6768 mgf] |
| 50% PAA/50 %EVA | 0.54 N | 44.29 mN |
| | [54.9 gram force (gf)] | [4516 mgf] |

As shown in Table 1, the flexibility of a non-woven mat improves with an increase in the amount of EVA in the binder composition. For instance, by including 25 weight percent EVA in a binder formulation, flexible mats may be made with Gurley stiffnesses less than 68.65 mN (7000 mgf), and 50 weight parent EVA in the binder composition, non-woven mats may be produced with Gurley stiffnesses of less than 49.03 mN (5000 mgf).

## Claims

1. A non-woven mat comprising:
10 to 100 weight percent chopped glass fibers;
0 to 90 weight percent synthetic fibers; and
a binder composition comprising a binder resin including a mixture of a thermoset material and a thermoplastic material, and a coupling agent, wherein the binder resin comprises >0 to 50 weight percent thermoset material and 50 to <100 weight percent thermoplastic material,
and wherein said non-woven mat has a Gurley stiffness of 19.61 to 68.65 mN (2000 to 7000 mgf), as measured by a Gurley Stiffness tester.

2. The non-woven mat of claim 1, wherein said mat comprises 50 to 90 weight percent chopped glass fibers and 10 to 50 weight percent synthetic fibers.

3. The non-woven mat of claim 1, wherein said chopped glass fibers are blended with said synthetic fibers.

4. The non-woven mat of any of claims 1 to 3, wherein said synthetic fibers comprise at least one of polypropylene, polyester, and a combination thereof.

5. The non-woven mat of any of claims 1 to 4, wherein said chopped glass fibers have lengths from 6.35 to 50.8 mm (0.25 to 2.0 inches).

6. The non-woven mat according to any of claims 1 to 5, wherein said synthetic fibers are chopped fibers having lengths from 12.7 to 50.8 mm (0.5 to 2.0 inches).

7. The non-woven mat according to any of claims 1 to 6, wherein said chopped glass fibers have diameters of 5 to 20 micrometers.

8. The non-woven mat according to any of claims 1 to 7, wherein said synthetic fibers have diameters of 10 to 16 micrometers.

9. The non-woven mat according to claim 1, wherein said thermoset material comprises at least one of an acrylic material, a urea formaldehyde material, or a combination of the two.

10. The non-woven mat according to claim 1, wherein said thermoplastic material comprises ethylene vinyl acetate.

11. The non-woven mat according to claim 1, wherein said binder resin comprises 70 to 90 weight percent thermoplastic material and 10 to 30 weight percent thermoset material.

12. The non-woven mat according to any of claims 1 to 11, wherein said coupling agent is present in said binder composition in an amount from 0.05 to 10 weight percent.

13. The non-woven mat according to any of claims 1 to 12, wherein said binder composition further includes at least one of a dye, an oil, a filler, a colorant, an aqueous dispersion, a UV stabilizer, a lubricant, a wetting agent, a surfactant, and a antistatic agent.

14. The non-woven mat according to any of claims 1 to 13, wherein said binder composition is resistant to styrene monomers.

15. The non-woven mat according to any of claims 1 to 14, wherein said mat has an average tensile strength of at least 13.64 kg (30 lb) in the machine direction and an average tensile strength of at least 9.09 kg (20 lb) in the cross direction.

16. The non-woven mat according to any of claims 1 to 15, wherein said mat has a Gurley stiffness of 24.52 to 58.84 mN (2500 to 6000 mgf).

17. A pultruded composite product comprising:
at least one roving impregnated with a thermosetting resin; and
a non-woven mat as defined in any of claims 1 to 16.

18. A gypsum wall board comprising:
a gypsum core; and
at least one non-woven mat interfaced with said gypsum core, said non-woven mat being as defined in any of claims 1 to 16.

## Patentansprüche

1. Vliesmatte, umfassend:
10 bis 100 Gewichtsprozent Schnittglasfasern,
0 bis 90 Gewichtsprozent synthetische Fasern und
eine Bindemittelzusammensetzung, die ein Bindemittelharz, das eine Mischung aus einem duroplastischen Material und einem thermoplastischen Material beinhaltet, und ein Kopplungsmittel umfasst, wobei das Bindemittelharz >0 bis 50 Gewichtsprozent des duroplastischen Materials und 50 bis <100 Gewichtsprozent des thermoplastischen Materials umfasst,
und wobei die Vliesmatte eine mittels eines Gurley-Steifheit-Messgerätes gemessene Gurley-Steifheit von 19,61 bis 68,65 mN (2.000 bis 7.000 mgf) aufweist.

2. Vliesmatte nach Anspruch 1, wobei die Matte 50 bis 90 Gewichtsprozent der Schnittglasfasern und 10 bis 50 Gewichtsprozent der synthetischen Fasern umfasst.

3. Vliesmatte nach Anspruch 1, wobei die Schnittglasfasern mit den synthetischen Fasern vermischt sind.

4. Vliesmatte nach einem der Ansprüche 1 bis 3, wobei die synthetischen Fasern wenigstens eines von Polypropylen, Polyester und einer Kombination davon umfassen.

5. Vliesmatte nach einem der Ansprüche 1 bis 4, wobei die Schnittglasfasern eine Länge von 6,35 bis 50,8 mm (0,25 bis 2,0 Inches) aufweisen.

6. Vliesmatte nach einem der Ansprüche 1 bis 5, wobei die synthetischen Fasern Schnittfasern sind, die eine Länge von 12,7 bis 50,8 mm (0,5 bis 2,0 Inches) aufweisen.

7. Vliesmatte nach einem der Ansprüche 1 bis 6, wobei die Schnittglasfasern einen Durchmesser von 5 bis 20 Mikrometer aufweisen.

8. Vliesmatte nach einem der Ansprüche 1 bis 7, wobei die synthetischen Fasern einen Durchmesser von 10 bis 16 Mikrometer aufweisen.

9. Vliesmatte nach Anspruch 1, wobei das duroplastische Material wenigstens eines von einem Acrylmaterial, einem Ureaformaldehydmaterial oder einer Kombination der beiden umfasst.

10. Vliesmatte nach Anspruch 1, wobei das duroplastische Material Ethylenvinylacetat umfasst.

11. Vliesmatte nach Anspruch 1, wobei das Bindemittelharz 70 bis 90 Gewichtsprozent des thermoplastischen Materials und 10 bis 30 Gewichtsprozent des duroplastischen Materials umfasst.

12. Vliesmatte nach einem der Ansprüche 1 bis 11, wobei das Kopplungsmittel in der Bindemittelzusammensetzung in einer Menge von 0,05 bis 10 Gewichtsprozent vorhanden ist.

13. Vliesmatte nach einem der Ansprüche 1 bis 12, wobei die Bindemittelzusammensetzung ferner wenigstens eines von einem Farbstoff, einem Öl, einem Füllstoff, einem Färbemittel, einer wässrigen Dispersion, einem UV Stabilisator, einem Schmiermittel, einem Benetzungsmittel, einem Tensid und einem antistatischen Mittel umfasst.

14. Vliesmatte nach einem der Ansprüche 1 bis 13, wobei die Bindemittelzusammensetzung beständig gegenüber Styrolmonomeren ist.

15. Vliesmatte nach einem der Ansprüche 1 bis 14, wobei die Matte eine durchschnittliche Zugfestigkeit von wenigstens 13,64 kg (30 lb) in Maschinenrichtung und eine durchschnittliche Zugfestigkeit von wenigstens 9,09 kg (20 lb) in Querrichtung aufweist.

16. Vliesmatte nach einem der Ansprüche 1 bis 15, wobei die Matte eine Gurley-Steifheit von 24,52 bis 58,84 mN (2.500 bis 6.000 mgf) aufweist.

17. Pultrudiertes Verbundwerkstoffprodukt, umfassend:
wenigstens ein Vorgarn, das mit einem thermohärtenden Harz imprägniert ist, und
eine Vliesmatte wie in einem der Ansprüche 1 bis 16 definiert.

18. Gipswandplatte, umfassend:
einen Gipskern und
wenigstens eine Vliesmatte, die mit dem Gipskern verbunden ist, wobei die Vliesmatte wie in einem der Ansprüche 1 bis 16 definiert.

## Revendications

1. Mat non-tissé comprenant:
10 à 100 % en poids de fibres de verre coupées ;
0 à 90 % en poids de fibres synthétiques ; et
une composition liante comprenant une résine liante incluant un mélange d'un matériau thermodurcissable et d'un matériau thermoplastique, et un agent de couplage, dans laquelle la résine liante comprend >0 à 50 % en poids de matériau thermodurcissable et 50 à <100 % en poids de matériau thermoplastique,
et ledit mat non-tissé ayant une rigidité de Gurley de 19,61 à 68,65 mN (2000 à 7000 mgf), telle que mesurée à l'aide d'un testeur de rigidité de Gurley.

2. Mat non-tissé selon la revendication 1, qui comprend 50 à 90 % en poids de fibres de verre coupées et 10 à 50 % en poids de fibres synthétiques.

3. Mat non-tissé selon la revendication 1, dans lequel lesdites fibres de verre coupées sont mélangées avec lesdites fibres synthétiques.

4. Mat non-tissée selon l'une des revendications 1 à 3, dans laquelle lesdites fibres synthétiques comprennent au moins un parmi du polypropylène, du polyester et une combinaison de ceux-ci.

5. Mat non-tissé selon l'une des revendications 1 à 4, dans lequel lesdites fibres de verre coupées ont une longueur de 6,35 à 50,8 mm (0,25 à 2,0 pouces).

6. Mat non-tissé selon l'une des revendications 1 à 5, dans lequel lesdites fibres synthétiques sont des fibres coupées ayant une longueur de 12,7 à 50,8 mm (0,5 à 2,0 pouces).

7. Mat non-tissé selon l'une des revendications 1 à 6, dans lequel lesdites fibres de verre coupées ont un diamètre de 5 à 20 micromètres.

8. Mat non-tissé selon l'une des revendications 1 à 7, dans lequel lesdites fibres synthétiques ont un diamètre de 10 à 16 micromètres.

9. Mat non-tissé selon la revendication 1, dans lequel ledit matériau thermodurcissable comprend au moins un parmi un matériau acrylique, un matériau urée-formaldéhyde et une combinaison des deux.

10. Mat non-tissé selon la revendication 1, dans lequel ledit matériau thermoplastique comprend de l'éthylène-acétate de vinyle.

11. Mat non-tissé selon la revendication 1, dans lequel ladite résine liante comprend 70 à 90 % en poids de matériau thermoplastique et 10 à 30 % en poids de matériau thermodurcissable.

12. Mat non-tissé selon l'une des revendications 1 à 11, dans lequel ledit agent de couplage est présent dans ladite composition liante en une quantité de 0,05 à 10 % en poids.

13. Mat non-tissé selon l'une des revendications 1 à 12, dans lequel ladite composition liante comprend en outre au moins un parmi une teinture, une huile, une charge, un colorant, une dispersion aqueuse, un stabilisant UV, un lubrifiant, un agent mouillant, un tensio-actif et un agent antistatique.

14. Mat non-tissé selon l'une des revendications 1 à 13, dans lequel ladite composition liante est résistante aux monomères styréniques.

15. Mat non-tissé selon l'une des revendications 1 à 14, qui a une résistance à la traction moyenne d'au moins 13,64 kg (30 lb) dans la direction de la machine et une résistance à la traction moyenne d'au moins 9,09 kg (20 lb) dans la direction transversale.

16. Mat non-tissé selon l'une des revendications 1 à 14, qui a une rigidité de Gurley de 24,52 à 58,84 mN (2500 à 6000 mgf).

17. Produit composite pultrudé comprenant :
au moins un roving imprégné avec une résine thermodurcissable ; et
un mat non-tissé tel que défini dans l'une des revendications 1 à 16.

18. Panneau de placoplâtre comprenant :
une âme en plâtre; et
au moins un mat non-tissé en interface avec ladite âme en plâtre, ledit mat non-tissé étant tel que défini dans l'une de revendications 1 à 16.
